(19) Europäisches Patentamt / European Patent Office / Office européen des brevets

(11) **EP 2 080 461 B1**

(12) **EUROPÄISCHE PATENTSCHRIFT**

(45) Veröffentlichungstag und Bekanntmachung des Hinweises auf die Patenterteilung:
**27.06.2012 Patentblatt 2012/26**

(51) Int Cl.:
*A47J 31/54* *(2006.01)*     *A47J 31/56* *(2006.01)*
*A47J 31/60* *(2006.01)*

(21) Anmeldenummer: **09100024.0**

(22) Anmeldetag: **08.01.2009**

(54) **Vorrichtung und Verfahren zur Ermittlung eines Verkalkungszustands in einem elektrischen Haushaltsgerät**

Device and method for calculating a calcification state in an electrical household device

Dispositif et procédé de détermination d'un état d'entartrage dans un appareil ménager électrique

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **18.01.2008 DE 102008005151**

(43) Veröffentlichungstag der Anmeldung:
**22.07.2009 Patentblatt 2009/30**

(73) Patentinhaber: **BSH Bosch und Siemens Hausgeräte GmbH**
**81739 München (DE)**

(72) Erfinder:
• **Aigner, Andreas**
  **83313, Siegsdorf (DE)**
• **Daburger, Josef**
  **83313, Siegsdorf / Hammer (DE)**
• **Hauser, Andreas**
  **83370, Seeon (DE)**
• **Mathes, Anton**
  **83364, Neukirchen am Teisenberg (DE)**

(56) Entgegenhaltungen:
**EP-A- 0 008 700        EP-A- 1 129 653**
**DE-A1-102004 014 024**

**Beschreibung**

Die Erfindung betrifft eine Vorrichtung und ein Verfahren zur Ermittlung eines Verkalkungszustands in einem elektrischen Haushaltsgerät, das einen Flüssigkeitserhitzer, zwei Temperatursensoren vor und hinter dem Flüssigkeitserhitzer, ein Durchflussmesser, eine Leistungsberechnungseinheit und eine Regelungseinrichtung zur Regelung einer Heizleistung des Flüssigkeitserhitzers aufweist. Außerdem betrifft sie ein elektrisches Haushaltsgerät, vorzugsweise eine Kaffee-Zubereitungsmaschine, mit einer derartigen Vorrichtung.

Die Erkennung von Verkalkungszuständen in elektrischen Haushaltsgeräten, speziell von solchen Geräten, die mit Wasser arbeiten, dient in erster Linie dazu, dass ein Benutzer bei Vorliegen eines solchen Zustands das Gerät entkalkt, um einer Beeinträchtigung von Betriebsfunktionen oder Beschädigungen von Betriebseinheiten des Geräts vorzubeugen. Bei Kaffee-Zubereitungsmaschinen im Besonderen leidet neben dem Gerät auch die Geschmacks-Qualität des zubereiteten Kaffees oder anderer damit zubereiteter Heißgetränke.

Die EP 1 129 653 A1 offenbart einen Wassererhitzer in einem elektrischen Haushaltsgerät, der mit einer Vorrichtung zur Ermittlung des Verkalkungszustands ausgestattet ist. Hierbei wird mittels einer Speicher- und Auswerteeinheit eine Zeitspanne zwischen dem ersten temperaturbedingten Ausschalten eines Heizelements und dem ersten Wiedereinschalten nach einer Abkühlphase gemessen und mit einer Soll-Zeitspanne verglichen.

Die EP_0_008 700 A1 offenbart eine elektronische Verkalkungsanzeige für einen Durchlauferhitzer, die dadurch gekennzeichnet ist, dass für einen Kaltleiter-beheizten Durchlauferhitzer mit einer Heizung, die wenigstens für den Bereich seines Wassereinlaufs und für den Bereich seines Wasserauslaufs jeweils für sich galvanisch getrennte Stromzuführungen hat, eine Schaltung vorgesehen ist, mit der eine relative Stromänderung in diesen Stromzuführungen für diese beiden Bereiche als Signalspannung für eine Anzeigeneinrichtung benutzt ist.

Aufgabe der vorliegenden Erfindung ist es, eine alternative und verbesserte Vorrichtung und ein Verfahren sowie ein Haushaltsgerät bereitzustellen, mit deren Hilfe zuverlässig ein Verkalkungszustand detektiert werden kann.

Diese Aufgabe wird bei einer Vorrichtung der eingangs genannten Art durch eine Kontrollvorrichtung gelöst, die im Betrieb eine ein Regelungsverhalten der Regelungseinrichtung repräsentierende Regelungskurve ermittelt, wobei die Regelungskurve ($K_1$, $K_2$, $K_3$) die effektive Wärmeaufnahme der Flüssigkeit repräsentiert und bei einer signifikanten Abweichung der Regelungskurve von einer Norm-Regelungskurve das Haushaltsgerät in einen Verkalkungserkennungs-Betriebsmodus schaltet. Als "Flüssigkeitserhitzer" wird hierbei eine einzelne Komponente oder eine Baugruppe von Komponenten verstanden, die zur Bereitstellung und Erhitzung einer Flüssigkeit notwendig sind. Insbesondere schließt dies Heizelemente und Pumpen mit ein. Erfindungsgemäß wird ausgenützt, dass die Vorgabe einer Heizleistung heute üblicherweise durch Regelungseinrichtungen erfolgt, die die Leistung in Abhängigkeit rückgekoppelter Parameterwerte steuern und sich daher eine Regelungskurve abbilden lässt. In dieser Regelungskurve sind die Regelungs- bzw. Steuerungswerte über die Zeit aufgetragen. Sie wird erfindungsgemäß mit einer Norm-Regelungskurve abgeglichen, die vorteilhafterweise in einem Speicher hinterlegt ist.

Bei der Regelungskurve im Rahmen der Erfindung kann es sich um die Regelungskurve handeln, die aus den Werten gebildet wird, mit denen ein Regler bei der Regelung den Flüssigkeitserhitzer steuert. Es kann jedoch alternativ ein zweiter parallel laufender Regler verwendet werden, der den Flüssigkeitserhitzer nicht selbst regelt, sondern nur eine derartige Regelung mit vollzieht. Auch in diesem Fall repräsentiert die Regelungskurve das Regelungsverhalten einer Regelungseinrichtung, wobei die Regelungskurve ($K_1$, $K_2$, $K_3$) die effektive Wärmeaufnahme der Flüssigkeit repräsentiert, die dann beide, den aktiv regelnden Regler und den die Regelung mit vollziehenden parallel laufenden Regler, umfasst. Der parallel laufende Regler dient hier also als Stellvertreter für den aktiv regelnden Regler zur Ausgabe der Regelungswerte an die Kontrolleinrichtung. Ein möglicher Vorteil eines solchen Abgleichs einer Regelungskurve mit einer Norm-Regelungskurve besteht darin, dass keine aufwändigen Zusatzkomponenten innerhalb der Vorrichtung notwendig sind, sondern meist lediglich die Kontrolleinrichtung und eine Speichereinheit, in der die Norm-Regelungskurve vorgehalten wird. Diese Komponenten können als Hardware, jedoch auch ganz oder teilweise als auf einem Controller implementierte Software ausgeführt sein. Sie können mit der Regelungseinrichtung über Schnittstellen verknüpft sein, und diese Schnittstellen können ebenfalls sowohl hardwareals auch softwaremäßig realisiert werden. Insofern kann die Vorrichtung insgesamt aus programmgesteuerten Software- und/oder Schaltungsbausteinen bestehen, die innerhalb einer technischen Einheit zusammengefasst sind. Ein Aufbau der Vorrichtung in Form von Software hat den Vorteil einer schnellen und kostengünstigen Realisierung.

Außerdem wird die Aufgabe durch ein Verfahren zur Ermittlung eines Verkalkungszustands in einem elektrischen Haushaltsgerät mit einem Flüssigkeitserhitzer und einer Regelungseinrichtung zur Regelung einer Heizleistung des Flüssigkeitserhitzers mit folgenden Verfahrensschritten gelöst:

- Ermittlung einer ein Regelungsverhalten einer Regelungseinrichtung repräsentierenden Regelungskurve, wobei die Regelungskurve ($K_1$, $K_2$, $K_3$) die effektive Wärmeaufnahme der Flüssigkeit repräsentiert.
- Vergleich der Regelungskurve mit einer Norm-Regelungskurve,
- Schalten des Haushaltsgeräts in einen Verkalkungserkennungs-Betriebsmodus bei einer signifikanten Abweichung der Regelungskurve von der Norm-Regelungskurve.

Die Aufgabe wird zudem durch ein elektrisches Haushaltsgerät gelöst, vorzugsweise eine Kaffee-Zubereitungsmaschine mit einer erfindungsgemäßen Vorrichtung.

Weitere besonders vorteilhafte Ausgestaltungen und Weiterbildungen der Erfindung ergeben sich auch aus den abhängigen Ansprüchen sowie der nachfolgenden Beschreibung. Dabei kann das erfindungsgemäße Verfahren auch entsprechend den abhängigen Ansprüchen zur Vorrichtung zur Ermittlung eines Verkalkungszustands weitergebildet sein.

Gemäß einer ersten Variante der Erfindung repräsentiert die durch die Kontrolleinrichtung ermittelte Regelungskurve eine Soll-Regelungskurve der Regelungseinrichtung, besonders bevorzugt ist die Regelungskurve gleich der Soll-Regelungskurve. Als Soll-Regelungskurve wird dabei die Kurve der Steuerungsbefehle der Regelungseinrichtung verstanden, die an den Flüssigkeitserhitzer zum Leistungseintrag in die Flüssigkeit weitergegeben werden. Sie kann insofern als Soll-Kurve verstanden werden, als sie nicht zwangsläufig den Ist-Leistungseintrag des Flüssigkeitserhitzers in die zu erhitzende Flüssigkeit wiedergibt. Durch Wärmeabgabe an die Umwelt, und im Speziellen an Kalkablagerungen im Bereich des Flüssigkeitserhitzers fällt die tatsächliche Wärmeaufnahme der Flüssigkeit in der Regel geringer aus als durch die Soll-Regelungskurve suggeriert. Die Soll-Regelungskurve kann dennoch zur Ermittlung des Verkalkungszustands herangezogen werden, da sich ihr Kurvenverlauf bei Vorliegen einer Verkalkung ändert und damit von der Norm-Regelungskurve abweicht. Das Heranziehen der Soll-Regelungskurve hat beispielsweise den Vorteil, dass die Steuerungsbefehle der Regelungseinrichtung außer an den Flüssigkeitserhitzer selbst einfach zusätzlich an die Kontrolleinrichtung weitergeleitet werden können, in der die Kurve ermittelt und mit der Norm-Regelungskurve abgeglichen werden kann. Es sind also keine zusätzlichen Ermittlungsvorrichtungen, etwa in Form von Sensoren notwendig, um die Soll-Regelungskurve zu ermitteln.

Die durch die Kontrolleinrichtung ermittelte Regelungskurve repräsentiert eine effektive Wärmeaufnahme der Flüssigkeit. Hierzu wird gemessen, wie viel Leistung tatsächlich in die Flüssigkeit eingetragen wird. Notwendig sind hierzu in der Regel zwei Temperatursensoren vor und hinter dem Flüssigkeitserhitzer und ein Durchflussmesser. Es kann dann die eingetragene Heizleistung $\dot{Q}$ in Abhängigkeit von einer flüssigkeitsspezifischen Materialkonstante c, dem Massestrom m der durchfließenden Flüssigkeit und der Differenz $\Delta T$ der an den beiden Sensoren gemessenen Temperaturen gemäß folgender Gleichung ermittelt werden:

$$\dot{Q} = c \cdot \dot{m} \cdot \Delta T \qquad\qquad (1)$$

Da mit dem Durchflussmesser üblicherweise nicht der Massestrom m der Flüssigkeit, sondern ein Volumenstrom $\dot{V}$ ermittelt wird, muss der Massestrom m in Abhängigkeit von der Dichte $\rho$ der Flüssigkeit gemäß

$$\dot{m} = \rho \cdot \dot{V} \qquad\qquad (2)$$

ermittelt werden. Erfindungsgemäß werden also drei Sensoren benötigt, nämlich zwei Temperatursensoren und ein Durchflussmesser. In vielen Haushaltsgeräten sind solche Sensoren jedoch ohnehin vorhanden, so dass sich der Zusatzaufwand in Grenzen halten lässt. Die Methode hat den Vorteil, dass sie den tatsächlichen Leistungseintrag des Flüssigkeitserhitzers in die Flüssigkeit misst.

Bei der Registrierung der Abweichung der Regelungskurve von der Norm-Regelungskurve sind verschiedene Varianten möglich.

Gemäß einer ersten Variante ist die Kontrolleinrichtung so ausgebildet, dass sie eine signifikante Abweichung registriert, wenn ein bestimmter Differenzwert zwischen einem charakteristischen Parameterwert der Regelungskurve und einem analogen Parameterwert der Norm-Regelungskurve oberhalb eines Schwellenwerts liegt. Für die Kontrolleinrichtung kann also ein charakteristischer Parameter für die Regelungskurve ausgewählt werden, und die Kontrolleinheit ermittelt den Parameterwert für diesen Parameter und vergleicht ihn mit dem Parameterwert des gleichen Parameters der Norm-Regelungskurve. In der Regel wird dabei der eine Parameterwert vom anderen Parameterwert subtrahiert. Als charakteristische Parameter können beispielsweise die Mittelwerte, die Standardabweichung, Minima oder Maxima der beiden Kurven angesehen werden, aber auch die mittlere Frequenz der Kurven oder die mittlere Amplitude. Weichen die beiden Parameterwerte nun voneinander so ab, dass ein gewisser, vorab definierter Schwellenwert überschritten wird, so registriert die Kontrolleinrichtung eine signifikante Abweichung der Regelungskurve von der Norm-Regelungskurve. Dieser Schwellenwert ist bevorzugt so gewählt, dass die Abweichung mindestens 20% des Parameterwerts der Norm-Regelungskurve beträgt, da damit sichergestellt werden kann, dass die Abweichung sich nicht mehr innerhalb der üblichen Kurventoleranzen bewegt, die auch bei unverkalkten Geräten auftreten. Diese Variante zur Registrierung signifikanter Abweichungen hat sich in ersten Versuchen als besonders einfach erwiesen, da üblicherweise die Ermittlung des Werts eines geeigneten Parameters genügt, um schnell und reproduzierbar signifikante Abweichungen zu erkennen.

Gemäß einer zweiten Variante, die wiederum ergänzend oder alternativ zur ersten Variante zur Anwendung kommen kann, ist die Kontrolleinrichtung so ausgebildet, dass sie eine signifikante Abweichung registriert, wenn eine bestimmte Abweichung der Form der Regelungskurve von der Form der Norm-Regelungskurve vorliegt. Insbesondere wird dabei das Schwingungsverhalten der Regelungseinrichtung überprüft. So kann es beispielsweise genügen zu erkennen, dass statt einer näherungsweise linearen Norm-Regelungskurve eine ausgeprägt wellenförmige Regelungskurve ermittelt wird. Statt (bzw. ergänzend zu) einem Ermittlungsmodul für Parameterwerte weist die Kontrolleinrichtung in dieser Variante ein Form-Ermittlungsmodul auf.

Bevorzugt weist die Vorrichtung einen Normkurvenspeicher auf, der die Norm-Regelungskurve vor oder bei der ersten Inbetriebnahme des Haushaltsgeräts und/oder bei der ersten Inbetriebnahme nach Durchlaufen eines Entkalkungszyklus aufzeichnet und hinterlegt. Die Norm-Regelungsskurve kann also herstellerseitig bereits in einem solchen Normkurvenspeicher, beispielsweise in einem ROM (Read Only Memory) Speicher hinterlegt werden. Alternativ kann als Norm-Regelungskurve die erste, bei Inbetriebnahme des Geräts von der Vorrichtung ermittelte Regelungskurve definiert und im Normkurvenspeicher hinterlegt werden. Sie repräsentiert dann diejenige Norm-Regelungskurve, die gerätespezifisch für den garantiert unverkalkten Zustand des Haushaltsgeräts vorliegt. Da das Gerät mit der Zeit altert und sich dadurch Parameterwerte verschieben können, auch wenn keine Verkalkung des Geräts vorliegt, kann die Norm-Regelungskurve nach einem Durchlaufen eines Entkalkungszyklus des Haushaltsgeräts, vorzugsweise nach jedem Entkalken, auch neu definiert und in dem Normkurvenspeicher hinterlegt werden. In den letzteren beiden Fällen wird statt eines ROM-Speichers üblicherweise ein beschreibbares Speichermodul, vorzugsweise ein nichtflüchtiger Speicher wie beispielsweise ein EEPROM (Electrically Erasable Programable Read Only Memory) zur Verwendung kommen.

In einer besonders vorteilhaften Ausführungsform der Erfindung ist die Kontrolleinrichtung so ausgebildet, dass sie einen Einschwingzeitraum der Regelungseinrichtung bei Betriebsbeginn des Haushaltsgeräts berücksichtigt und erst in den Verkalkungserkennungs-Betriebsmodus schaltet, wenn sie nach dem Einschwingzeitraum eine signifikante Abweichung der Regelungskurve von der Norm-Regelungskurve ermittelt. Erfahrungsgemäß benötigen Haushaltsgeräte mit Flüssigkeitserhitzern eine gewisse Vorlaufzeit, speziell eine Vorwärmphase, bevor eine wirklich repräsentative Messung im Betrieb erfolgen kann. In diesem Einschwingzeitraum kann zwar bereits eine Ermittlung der Regelungskurve und ein Abgleich mit der Norm-Regelungskurve erfolgen, doch kann es dabei noch zu Fehlinterpretationen der Abweichungen der beiden Kurven kommen. Es macht daher Sinn, diesen Einschwingzeitraum abzuwarten und erst danach eine signifikante Abweichung zu registrieren und entsprechend durch Schalten in den Verkalkungserkennungs-Betriebsmodus zu reagieren. Die Kontrolleinrichtung kann dabei beispielsweise über eine Zeitschaltung verfügen, so dass automatisch eine vordefinierte Zeitspanne abgewartet wird, bis sie im erfindungsgemäßen Sinne aktiv wird, oder sie kann den Verlauf, insbesondere das Schwingungsverhalten der Regelungskurve registrieren und erst bei einem stabilen Kurvenverlauf weitere Schritte einleiten. Außerdem ist es möglich, die Kontrolleinrichtung so auszubilden, dass zunächst der Durchlauf einer bestimmten Flüssigkeitsmenge abgewartet wird, bis sie im erfindungsgemäßen Sinne aktiv wird.

Zusätzlich oder alternativ kann die Kontrolleinrichtung so ausgebildet sein, dass bei stärkeren Schwankungen von Eingangs-Messgrößen wie beispielsweise der Eingangstemperatur der Flüssigkeit oder des Flüssigkeitsdurchlaufs die Durchführung eines erfindungsgemäßen Verfahrens mindestens zeitweise blockiert wird. Durch derartige stärkere Schwankungen kann nämlich ein ähnlicher Effekt entstehen wie während eines Einschwingzeitraums, nämlich, dass keine repräsentative Messung möglich ist. Es kann daher von Vorteil sein, das Verfahren erst dann durchzuführen, wenn derartige Schwankungen nicht mehr vorliegen, beispielsweise bei der nächsten Aktivierung des elektrischen Haushaltsgeräts durch einen Benutzer.

Bevorzugt wird innerhalb der Vorrichtung eine Regelungseinrichtung mit einem Regelungselement verwendet, das so ausgebildet ist, dass es Steuerungsbefehle in einem bestimmten Takt, vorzugsweise von unter einer Sekunde, ausgibt. Als Steuerungsbefehle können dabei Schaltmuster verwendet werden, die als Signale digitale Informationen in Form einer Steuerzeichenkette von Einsen und Nullen aufweisen. So kann beispielsweise zum Eintrag von 50% der Maximalleistung des Flüssigkeitserhitzers eine Steuerzeichenkette an eine Heizungsschalteinheit übermittelt werden, die alternierend aus Einsen und Nullen besteht. Eine Taktung von unter einer Sekunde, vorzugsweise unter 1/10 Sekunde, ist vor allem insofern sinnvoll, als damit eine relativ hohe Genauigkeit der Regelungskurve erzielt werden kann, die bei längeren Taktabständen signifikant reduziert würde. Es kann daher schneller und sicherer ein Verkalkungszustand festgestellt werden.

Ein erfindungsgemäßes Haushaltsgerät ist vorteilhafterweise so ausgebildet, dass im Verkalkungserkennungs-Betriebsmodus eine Warnanzeige des Haushaltsgeräts aktiviert wird und/oder eine Funktion des Haushaltsgeräts eingeschränkt wird. Ein Benutzer wird über den Verkalkungszustand des Geräts bzw. den Verkalkungserkennungs-Betriebsmodus also dadurch informiert, dass er über optische und/oder akustische Signale der Warnanzeige bzw. durch die erkennbare Einschränkung der Funktion des Haushaltsgeräts darauf hingewiesen wird. Beispielsweise kann eine Warnleuchte den Verkalkungszustand anzeigen oder es können Funktionen des Geräts, im Speziellen das Aufheizen von Flüssigkeiten, blockiert sein. Durch letztere Vorgehensweise wird gleichzeitig vorteilhafterweise sichergestellt, dass die Verkalkung des Haushaltsgeräts nicht weiter fortschreitet oder z.B. der Flüssigkeitserhitzer beschädigt oder sogar zerstört wird. Unter einer Funktionsbeschränkung kann auch eine Zwangsabschaltung des ganzen Geräts oder von einzelnen Komponenten des Geräts zu verstehen sein. Besonders vorteilhafterweise können die Warnanzeige und die Einschränkung der Funktion des Geräts auch kombiniert werden und ggf. zeitversetzt aktiviert werden. So kann ein Benutzer beispielsweise über den Verkalkungszustand mittels Warnanzeige informiert werden und nach weiteren 20 Betriebsdurchläufen des Haushaltsgeräts das Aufheizen von Flüssigkeiten oder das gesamte Gerät blockiert werden. Auf diese Art und Weise erhält der Benutzer die Möglichkeit, sich zwar zeitnah, aber nicht sofort um die Beseitigung des Verkalkungszustands kümmern zu müssen.

Das Prinzip der Erfindung wird im Folgenden anhand einer Zeichnung beispielshalber noch näher erläutert. In der Zeichnung zeigen:

Figur 1    eine schematische Blockdarstellung einer Vorrichtung zur Erkennung eines Verkalkungszustands mit weiteren Elementen eines Haushaltsgeräts,

Figur 2    ein Diagramm mit Regelungskurven,

Figur 3    eine detaillierte schematische Blockdarstellung einer Steuervorrichtung eines Haushaltsgeräts mit einer Vorrichtung zur Erkennung eines Verkalkungszustands mit weiteren Elementen eines Haushaltsgeräts,

Figur 4    eine komprimierte Darstellung mehrerer beispielhafter Steuerzeichenketten.

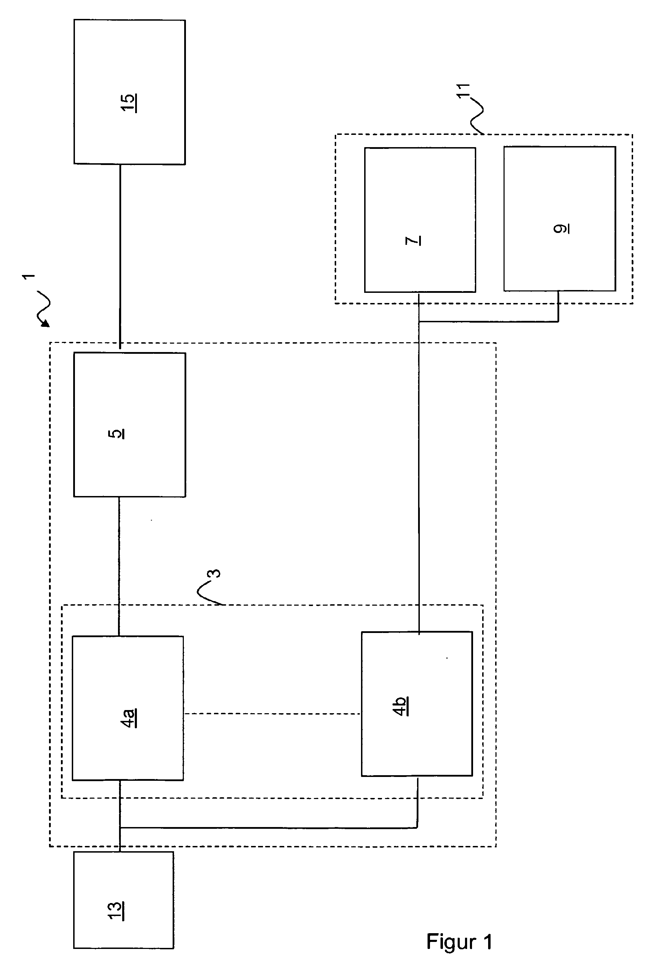

Figur 1 zeigt eine Vorrichtung 1 zur Erkennung eines Verkalkungszustands, die eine Regelungseinrichtung 3 und eine Kontrolleinrichtung 5 umfasst. Innerhalb der Regelungseinrichtung sind zwei Regler 4a, 4b vorgesehen, wobei der erste Regler 4a direkt mit der Kontrolleinrichtung 5 verbunden ist. Die Kontrolleinrichtung steht in Verbindung mit einer Warnanzeige 15. Der Regler 4b regelt einen Flüssigkeitserhitzer 11, der ein Heizelement 7 und eine Pumpe 9 umfasst. Beide Regler 4a, 4b erhalten Daten aus einer Sensorik 13, beispielsweise aus Temperatursensoren und Durchflussmessern. Auf Basis der Daten aus der Sensorik 13 regelt der zweite Regler 4b der Regelungseinrichtung 3 den Flüssigkeitserhitzer 11. Er kann dabei sowohl den Leistungseintrag des Heizelements 7 in eine Flüssigkeit steuern als auch die Pumpleistung der Pumpe 9. Parallel und analog hierzu simuliert der erste Regler 4a diese Steuerung und vollzieht damit das Regelungsverhalten des zweiten Reglers 4b mit und fungiert somit als dessen Stellvertreter. Dies ist beispielsweise vorteilhaft, wenn die Leistung des Ausgangssignals des zweiten Reglers 4b nicht ausreicht, um sowohl das das Heizelement 7 anzusteuern und die Kontrolleinrichtung 5 mit einem entsprechenden Signal zu versorgen. Die Kontrolleinrichtung 5 ermittelt aus der simulierten Regelung des ersten Reglers 4a eine Regelungskurve und gleich diese mit einer Norm-Regelungskurve ab. Bei einer signifikanten Abweichung der Regelungskurve von der Norm-Regelungskurve schaltet die Kontrolleinrichtung 5 das Haushaltsgerät in einen Verkalkungserkennungs-Betriebsmodus und aktiviert dazu die Warnanzeige 15, die so einen Verkalkungszustand an einen Benutzer des Haushaltsgeräts signalisiert.

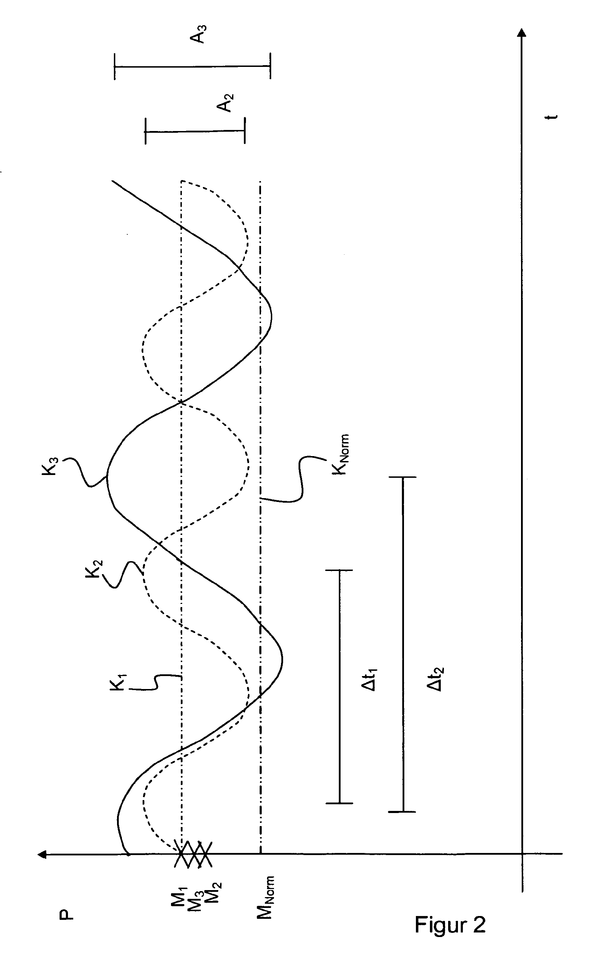

Figur 2 zeigt mehrere mögliche Regelungskurven $K_1$, $K_2$, $K_3$ einer Regelungseinrichtung 3 sowie eine Norm-Regelungskurve $K_{Norm}$. Aufgetragen ist hier über die Zeit t die Soll-Leistung P (in willkürlichen Einheiten) zur Ansteuerung eines Heizelements 7, um Wärme in eine Flüssigkeit einzutragen. Die Norm-Regelungskurve $K_{Norm}$ repräsentiert einen möglichen Regelungsverlauf, der bei unverkalktem Zustand des Haushaltsgeräts zu erwarten ist. Er ist hier streng linear, das heißt die Soll-Leistung P ist konstant. Andere Verläufe von Norm-Regelungskurven, insbesondere nicht-lineare, sind jedoch auch möglich.

Die Regelungskurven $K_1$, $K_2$, $K_3$ sind signifikant unterschiedlich zu der Norm-Regelungskurve $K_{Norm}$: Die erste Regelungskurve $K_1$ ist zwar formgleich mit der Norm-Regelungskurve $K_{Norm}$, doch ihr Mittelwert $M_1$ ist deutlich höher als der Mittelwert $M_{Norm}$ der Norm-Regelungskurve $K_{Norm}$. Die zweite und dritte Regelungskurve $K_2$, $K_3$ weisen ebenfalls höhere Mittelwerte $M_2$, $M_3$ auf und unterscheiden sich zudem in ihrer Form signifikant von der Norm-Regelungskurve $K_{Norm}$. Sie zeigen ein Sinus-Wellenverhalten mit einer messbaren Frequenz bzw. mit messbaren Perioden $\Delta t_2$, $\Delta t_3$. Wie zu sehen ist, unterscheiden sich die Kurven $K_1$, $K_2$, $K_3$ untereinander ebenso in ihrer Frequenz wie in ihren Amplituden $A_2$, $A_3$ und den Standardabweichungen vom Mittelwert. Hingegen schwingen die Regelungskurve $K_1$ und die Norm-Regelungskurve $K_{Norm}$ höchstens minimal.

Aufgrund dieser deutlichen Unterschiede können die Regelungskurven $K_1$, $K_2$, $K_3$ voneinander und vor allem von der Norm-Regelungskurve $K_{Norm}$ klar abgegrenzt werden, zum Beispiel durch Vergleich repräsentativer Parameterwerte wie den Mittelwerten $M_1$, $M_2$, $M_3$, $M_{Norm}$, oder ihrer Standardabweichungen, den Amplituden $A_2$, $A_3$ und der Perioden der Schwingungen und/oder durch Vergleich der Kurvenformen. Die Kontrolleinrichtung 5 bedient sich einer dieser beiden oder dieser beider Vergleichsmethoden um festzustellen, ob eine signifikante Abweichung vorliegt.

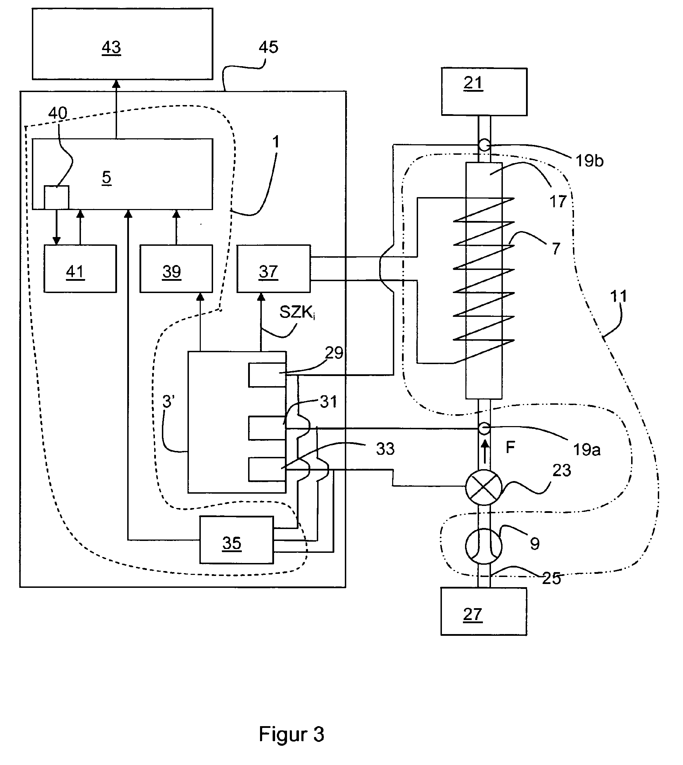

Figur 3 zeigt in detaillierter schematischer Blockdarstellung eine Steuervorrichtung 45 und mehrere Komponenten eines elektrischen Haushaltsgeräts, nämlich einen Aktuator 43, und eine Flüssigkeitsaufbereitungsbaugruppe mit einem Flüssigkeitserhitzer 11, zwei Temperatursensoren 19a, 19b und einem Durchflussmesser 23 sowie einem Flüssigkeitstank 27, einer Leitung 25 und einer Weiterverarbeitungseinheit 21. Der Flüssigkeitserhitzer 11 ist dabei aus einer Pumpe 9, einem Durchlauferhitzerrohr 17 und einem Heizelement 7 gebildet. Das Heizelement 7 in Form eines Heizdrahts ist spiralförmig um das Durchlauferhitzerrohr 17 gewickelt.

Eine Flüssigkeit (nicht dargestellt) wird mit Hilfe der Pumpe 9 von dem Flüssigkeitstank 27 durch die Leitung 25 in einer Fließrichtung F in Richtung der Weiterverarbeitungseinheit 21 gepumpt. Die Weiterverarbeitungseinheit 21 verarbeitet die Flüssigkeit weiter. Hierbei kann es sich beispielsweise um eine Brüheinheit einer Kaffee-Zubereitungsmaschine handeln, in der Heißwasser aus der Leitung 25 zum Brühen von Kaffee verwendet wird. Im Durchlauferhitzerrohr 17 wird die Flüssigkeit mit Hilfe des Heizelements 7 erhitzt. Am ersten Temperatursensor 19a wird die Eingangstemperatur, am zweiten Temperatursensor 19b die Ausgangstemperatur der Flüssigkeit gemessen. Die Flüssigkeitsdurchflussmenge wird mit Hilfe des Durchflussmessers 23 ermittelt. Der Wärmeeintrag in die Flüssigkeit hängt somit von der aktuellen Temperatur des Durchlauferhitzerrohrs 17 und der Durchflussgeschwindigkeit ab.

Die Steuerungsvorrichtung 45 dient u. a. zur Steuerung des Flüssigkeitserhitzers 11. Sie umfasst eine Regelungseinrichtung 3' und eine Heizungsschalteinheit 37 sowie erfindungsgemäß zusätzlich eine Vorrichtung 1 zur Erkennung eines Verkalkungszustands. Innerhalb der Vorrichtung 1 zur Erkennung des Verkalkungszustands sind folgende Komponenten integriert: ein Speicher 39, eine Leistungsberechnungseinheit 35, ein Normkurvenspeicher 41 und eine Kontrolleinrichtung 5 mit einer NormkurvenAufzeichnungseinheit 40. All diese Komponenten können ganz oder teilweise als Softwaremodule ausgebildet sein und/oder ganz oder teilweise in Form von Schaltungen vorliegen. Dabei können einzelne Module oder Schaltungen auch zusammengefasst sein.

Die Regelungseinrichtung 3', die über die Eingangsschnittstellen 29, 31, 33 die Temperatur- bzw. Durchflussdaten von dem ersten und zweiten Temperatursensor 19a, 19b und dem Durchflussmesser 23 bezieht, generiert Steuerungsbefehle in Form von digitalen Steuerzeichenketten $SZK_i$, die sie an die Heizungsschalteinheit 37 weitergibt. Die Heizungsschalteinheit 37 schaltet in Abhängigkeit von den Steuerzeichenketten $SZK_i$ der Regelungseinrichtung 3' Strom durch das Heizelement 7 an und aus.

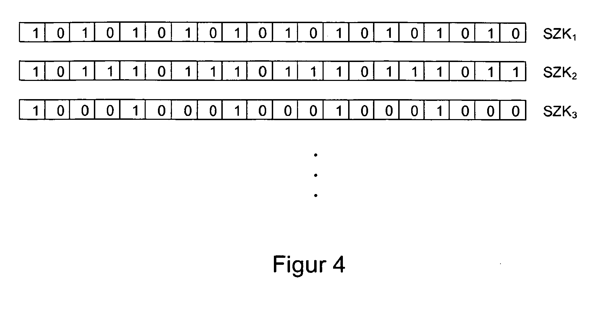

Figur 4 zeigt als Beispiel drei solche Steuerzeichenketten $SZK_1$, $SZK_2$, $SZK_3$, wie sie von einer Regelungseinrichtung 3' an eine Heizungsschalteinheit 37 übergeben werden können. Die Zeichen sind entweder Einsen oder Nullen, wobei eine Eins der Heizungsschalteinheit 37 signalisiert, dass sie das Heizelement 7 mit Strom versorgen soll, und eine Null, dass kein Strom fließen soll. Die erste Steuerzeichenkette $SZK_1$ mit ihrer gleichen Anzahl von Einsen und Nullen, d.h. einem 50%igen Anteil an Einsen bewirkt einen Stromfluss in 50% der Zeit, in der die Steuerzeichenkette $SZK_1$ Gültigkeit hat und damit eine Soll-Leistung von 50% der möglichen Maximalleistung des Heizelements 7. Analoges gilt für die zweite Steuerzeichenkette $SKZ_2$, bei der 75% der Maximalleistung erzeugt wird und für die dritte Steuerzeichenkette $SZK_3$ mit 25%.

Die Steuerzeichenketten $SZK_1$, $SZK_2$, $SZK_3$ weisen hier eine Länge von 20 Zeichen auf. Üblicherweise werden sie jedoch in einem Takt von 10ms übertragen, so dass 100 Zahlen eine Steuerzeichenkette bilden, die innerhalb von einer Sekunde an die Heizungsschalteinheit übertragen werden kann. Bei einer solchen Taktung kann bei einer Netzfrequenz von 50 Hz jedes Zeichen eine Halbwelle der Netzspannung ein- oder ausschalten.

Für die Ermittlung der Regelungskurven nach Figur 2 kann z.B. die Soll-Leistung P in % der möglichen Maximalleistung über die Zeit aufgetragen werden, wobei als Soll-Leistung P jeweils der Wert einer Steuerzeichenkette $SZK_1$, $SZK_2$, $SZK_3$ verwendet werden kann.

Wie aus Figur 3 zu ersehen ist, kann mit Hilfe der Vorrichtung 1 parallel ermittelt werden, ob ein Verkalkungszustand, vor allem im Bereich des Durchlauferhitzerrohrs 17, vorliegt. Die Steuerungsbefehle der Regelungseinrichtung 3' werden hierzu nicht nur an die Heizungsschalteinheit 37 übergeben sonder auch über einen Puffer-Speicher 39 in die Kontrolleinrichtung 5 eingespeist. Die Kontrolleinrichtung 5 ermittelt daraus die Soll-Regelungskurve der Regelungseinrichtung 3', also die Leistung P, die aufgrund der Steuerungsbefehle der Regelungseinrichtung 3' in die Flüssigkeit eingetragen werden soll.

Zusätzlich zur Ermittlung der Soll-Regelungskurve wird bei diesem Ausführungsbeispiel über die Leistungsberechnungseinheit 35 die tatsächlich in die Flüssigkeit eingetragene Wärme-Leistung ermittelt. Die Leistungsberechnungseinheit 35 bezieht die selben Daten der beiden Temperatursensoren 19a, 19b und des Durchflussmessers und ermittelt die eingetragene Heizleistung $\dot{Q}$ aus der Differenz $\Delta T$ der vom ersten Temperatursensor 19a gemessenen Temperatur von der vom zweiten Temperatursensor 19b gemessenen Temperatur und dem durch den Durchflussmesser geflossenen Flüssigkeitsvolumen pro Zeit $\dot{V}$ gemäß den Gleichungen (1) und (2). Die von der Leistungsberechnungseinheit 35 ermittelte tatsächlich in die Flüssigkeit eingetragene Heizleistung wird in die Kontrolleinrichtung 5 eingespeist. Aus ihr lässt sich die Ist-Regelungskurve bilden, die die tatsächlich eingetragene Heizleistung über die Zeit aufträgt.

Die Kontrolleinrichtung 5 vergleicht die Soll-Regelungskurve und/oder die Ist-Regelungskurve mit der Norm-Regelungskurve des Haushaltsgeräts, die z.B. bereits vom Produzenten des Geräts im Normkurvenspeicher 41 hinterlegt worden sein kann.

Alternativ kann als Norm-Regelungskurve auch von einer Normkurvenaufzeichnungseinheit 40 eine Regelungskurve beim ersten Betrieb des Geräts erfasst und im Normkurvenspeicher 41 abgelegt werden.

Um alterungsbedingte Veränderungen bei der Norm-Regelungskurve mit nachzuvollziehen, kann, sofern das gerät solch eine Normkurvenaufzeichnungseinheit 40 aufweist, nach Durchlaufen eines Entkalkungszyklus wieder eine erste gemessene Regelungskurve als neue Norm-Regelungskurve im Normkurvenspeicher 41 abgelegt werden.

Aus dem Abgleich zwischen der Soll-Regelungskurve und/oder Ist-Regelungskurve und der Norm-Regelungskurve durch die Kontrolleinrichtung 5 geht hervor, ob eine signifikante Abweichung vorliegt. Bei einer solchen signifikanten Abweichung sendet die Kontrolleinrichtung 5 zur Schaltung eines Betriebsmodus des Haushaltsgeräts ein Signal an den Aktuator 43. Dieser kann beispielsweise Funktionen des Haushaltsgeräts einschränken oder ganz deaktivieren bzw. das Gerät ganz deaktivieren.

Da es sich bei den vorhergehenden, detailliert beschriebenen Figuren um Ausführungsbeispiele handelt, können die dort beschriebenen Elemente in üblicher Weise vom Fachmann in einem weiten Umfang modifiziert werden, ohne den Bereich der Erfindung zu verlassen. Insbesondere kann in einer erfindungsgemäßen Vorrichtung zur Ermittlung eines Verkalkungszustands auch die Leistungsberechnungseinheit weggelassen werden und nur eine Kontrolle über die Soll-Leistung erfolgen oder es kann andersherum auch nur eine Kontrolle über die von der Leistungsberechnungseinheit ermittelte tatsächlich eingetragene Heizleistung erfolgen. Außerdem schließt die Verwendung der unbestimmten Artikel "ein" bzw. "eine" nicht aus, dass die betreffenden Merkmale auch mehrfach vorhanden sein können.

Bezugszeichenliste

| 1 | Vorrichtung |
| 3 | Regelungseinrichtung |
| 4a, 4b | Regler |
| 5 | Kontrolleinrichtung |
| 7 | Heizelement |
| 9 | Pumpe |
| 11 | Flüssigkeitserhitzer |
| 13 | Sensorik |
| 15 | Warnanzeige |
| 17 | softwaregesteuerte Rechnereinheit |
| 19a, 19b | Temperatursensoren |
| 21 | Weiterverarbeitungseinheit |
| 23 | Durchflussmesser |
| 25 | Leitung |
| 27 | Flüssigkeitstank |
| 29, 31, 33 | Eingangsschnittstellen |
| 35 | Leistungsberechnungseinheit |
| 37 | Heizungsschalteinheit |
| 39 | Speicher |
| 40 | Normkurvenaufzeichnungseinheit |
| 41 | Normkurvenspeicher |
| 43 | Aktuator |
| 45 | Steuervorrichtung |
| $A_2$, $A_3$ | Amplituden |
| P, | Leistungen |
| $K_1$, $K_2$, | $K_3$ Regelungskurven |
| $K_{Norm}$ | Norm-Regelungskurve |
| $M_1$, $M_2$, | $M_3$, $M_{Norm}$ Mittelwerte |
| $SZK_i$, $SZK_1$, $SZK_2$, $SZK_3$ | Steuerzeichenketten |
| t | Zeit |
| $\Delta t_2$, $\Delta t_3$ | Zeitdifferenzen |

**Patentansprüche**

1. Vorrichtung (1) zur Ermittlung eines Verkalkungszustands in einem elektrischen Haushaltsgerät, das einen Flüs-

EP 2 080 461 B1

sigkeitserhitzer (11), zwei Temperatursensoren (19a, 19b) vor und hinter dem Flüssigkeitserhitzer, ein Durchflussmesser (23), eine Leistungsberechnungseinheit (35) und eine Regelungseinrichtung (3, 3') zur Regelung einer Heizleistung (P) des Flüssigkeitserhitzers (11) aufweist, **gekennzeichnet durch** eine Kontrolleinrichtung (5), die im Betrieb eine ein Regelungsverhalten der Regelungseinrichtung (3, 3') repräsentierende Regelungskurve ($K_1$, $K_2$, $K_3$) ermittelt wobei die Regelungskurve ($K_1$, $K_2$, $K_3$) die effektive Wärmeaufna,hme der Flüssigkeit repräsentiert und bei einer signifikanten Abweichung der Regelungskurve ($K_1$, $K_2$, $K_3$) von einer Norm-Regelungskurve ($K_{Norm}$) das Haushaltsgerät in einen Verkalkungserkennungs-Betriebsmodus schaltet.

2. Vorrichtung gemäß Anspruch 1, **dadurch gekennzeichnet, dass** die durch die Kontrolleinrichtung (5) ermittelte Regelungskurve ($K_1$, $K_2$, $K_3$) eine Soll-Regelungskurve der Regelungseinrichtung (3, 3') repräsentiert.

3. Vorrichtung gemäß einem der vorhergehenden Ansprüche, **dadurch gekennzeichnet, dass** die Kontrolleinrichtung (5) so ausgebildet ist, dass sie eine signifikante Abweichung registriert, wenn ein bestimmter Differenzwert zwischen einem charakteristischen Parameterwert der Regelungskurve ($K_1$, $K_2$, $K_3$) und einem analogen Parameterwert der Norm-Regelungskurve ($K_{Norm}$) oberhalb eines Schwellenwerts liegt.

4. Vorrichtung gemäß Anspruch 3, **dadurch gekennzeichnet, dass** der Schwellenwert um mindestens 20% vom Parameterwert der Norm-Regelungskurve ($K_{Norm}$) abweicht.

5. Vorrichtung gemäß einem der vorhergehenden Ansprüche, **dadurch gekennzeichnet, dass** die Kontrolleinrichtung (5) so ausgebildet ist, dass sie eine signifikante Abweichung registriert, wenn eine bestimmte Abweichung der Form der Regelungskurve ($K_1$, $K_2$, $K_3$) von der Form der Norm-Regelungskurve ($K_{Norm}$) vorliegt.

6. Vorrichtung gemäß einem der vorhergehenden Ansprüche, **gekennzeichnet durch** einen Normkurvenspeicher (41), der die Norm-Regelungskurve (KNorm) vor oder bei der ersten Inbetriebnahme des Haushaltsgeräts und/oder bei der ersten Inbetriebnahme nach Durchlaufen eines Entkalkungszyklus aufzeichnet und hinterlegt.

7. Vorrichtung gemäß einem der vorhergehenden Ansprüche, **dadurch gekennzeichnet, dass** die Kontrolleinrichtung (5) so ausgebildet ist, dass sie einen Einschwingzeitraum der Regelungseinrichtung (3, 3') bei Betriebsbeginn des Haushaltsgeräts berücksichtigt und in den Verkalkungserkennungs-Betriebsmodus schaltet, wenn sie nach dem Einschwingzeitraum eine signifikante Abweichung der Regelungskurve ($K_1$, $K_2$, $K_3$) von der Norm-Regelungskurve ($K_{Norm}$) ermittelt.

8. Verfahren zur Ermittlung eines Verkalkungszustands in einem elektrischen Haushaltsgerät mit einem Flüssigkeitserhitzer (11) zwei Temperatursensoren (19a, 19b) vor und hinter dem Flüssigkeitserhitzer, einem Durchflussmesser (23), einer Leistungsberechnurmseinheit (35) und einer Regelungseinrichtung (3, 3') zur Regelung einer Heizleistung (P) des Flüssigkeitserhitzers (11), mit folgenden Schritten:

   - Ermittlung einer ein Regelungsverhalten der Regelungseinrichtung (3, 3') repräsentierenden Regelungskurve ($K_1$, $K_2$, $K_3$), wobei die Regelungskurve ($K_1$, $K_2$, $K_3$) die effektive Wärmeaufnahme der Flüssigkeit repräsentiert.
   - Vergleich der Regelungskurve ($K_1$, $K_2$, $K_3$) mit einer Norm-Regelungskurve ($K_{Norm}$),
   - Schalten des Haushaltsgeräts in einen Verkalkungserkennungs-Betriebsmodus bei einer signifikanten Ab-weichung der Regelungskurve ($K_1$, $K_2$, $K_3$) von der Norm-Regelungskurve ($K_{Norm}$).

9. Elektrisches Haushaltsgerät, vorzugsweise Kaffee-Zubereitungsmaschine, **gekennzeichnet durch** eine Vorrichtung (1) gemäß einem der Ansprüche 1 bis 8.

10. Haushaltsgerät gemäß Anspruch 9, **dadurch gekennzeichnet, dass** es so ausgebildet ist, dass im Verkalkungserkennungs-Betriebsmodus eine Warnanzeige (15) des Haushaltsgeräts aktiviert wird und/oder eine Funktion des Haushaltsgeräts eingeschränkt wird.

**Claims**

1. Device (1) for ascertaining a calcification state in an electric domestic appliance, which comprises a liquid heater (11), two temperature sensors (19a, 19b) in front of and behind the liquid heater, a throughflow meter (23), a power calculating unit (35) and a regulating device (3, 3') for regulating a heating power (P) of the liquid heater (11), **characterised by** a control device (5) which in operation determines a regulation plot ($K_1$, $K_2$, $K_3$) representing a

8

regulating behaviour of the regulating device, wherein the regulation plot ($K_1$, $K_2$, $K_3$) represents the effective heat absorption of the liquid and in the case of a significant difference of the regulation plot ($K_1$, $K_2$, $K_3$) from a standard regulation plot ($K_{Norm}$) the domestic appliance is switched to a calcification recognition operating mode.

2. Device according to claim 1, **characterised in that** the regulation plot ($K_1$, $K_2$, $K_3$) determined by the control device (5) represents a target regulation plot of the regulating device (3, 3').

3. Device according to one of the preceding claims, **characterised in that** the control device (5) is so constructed that it registers a significant difference if a specific difference value between a characteristic parameter value of the regulation plot ($K_1$, $K_2$, $K_3$) and an analogous parameter value of the standard regulation plot ($K_{Norm}$) lies above a threshold value.

4. Device according to claim 3, **characterised in that** the threshold value differs by at least 20% from the parameter value of the standard regulation plot ($K_{Norm}$).

5. Device according to any one of the preceding claims, **characterised in that** the control device (5) is so constructed that it registers a significant difference if a specific difference of the form of the regulation plot ($K_1$, $K_2$, $K_3$) from the form of the standard regulation plot ($K_{Norm}$) is present.

6. Device according to any one of the preceding claims, **characterised by** a standard-plot memory (41) which records and files the standard regulation plot ($K_{Norm}$) before or at the time of first placing the domestic appliance in operation and/or at the time of first placing in operation after running through a decalcification cycle.

7. Device according to any one of the preceding claims, **characterised in that** the control device (5) is so constructed that it takes into consideration a transient time period of the regulating device (3, 3') at the time of starting operation of the domestic appliance and switches to the calcification recognition operating mode if after the transient time period a significant difference of the regulation plot ($K_1$, $K_2$, $K_3$) from the standard regulation plot ($K_{Norm}$) is ascertained.

8. Method for ascertaining a calcification state in an electric domestic appliance with a liquid heater (11), two temperature sensors (19a, 19b) in front of and behind the liquid heater, a throughflow meter (23), a power calculating unit (35) and a regulating device (3, 3') for regulating a heating power (P) of the liquid heater (11), comprising the following steps:

- determining a regulation curve ($K_1$, $K_2$, $K_3$) representing a regulating behaviour of the regulating device (3, 3'), wherein the regulation plot ($K_1$, $K_2$, $K_3$) represents the effective heat absorption of the liquid,
- comparing the regulation plot ($K_1$, $K_2$, $K_3$) with a standard regulation plot ($K_{Norm}$) and
- switching the domestic appliance to a calcification recognition operating mode in the case of a significant difference of the regulation plot ($K_1$, $K_2$, $K_3$) from the standard regulation plot ($K_{Norm}$).

9. Electric domestic appliance, preferably coffee machine, **characterised by** a device (1) according to any one of claims 1 to 8.

10. Domestic appliance according to claim 9, **characterised in that** it is so constructed that in the calcification recognition operating mode a warning display (15) of the domestic appliance is activated and/or a function of the domestic appliance is restricted.

**Revendications**

1. Dispositif (1) pour déterminer un état d'entartrage dans un appareil ménager électrique, qui présente un réchauffeur de liquide (11), deux capteurs de température (19a, 19b) en amont et en aval du réchauffeur de liquide, un débitmètre (23), une unité de calcul de puissance (35) et un dispositif de réglage (3, 3') pour le réglage d'une puissance de chauffage (P) du réchauffeur de liquide (11), **caractérisé par** un système de contrôle (5), qui détermine pendant le service une courbe de réglage ($K_1$, $K_2$, $K_3$) représentant un comportement au réglage du dispositif de réglage (3, 3'), la courbe de réglage ($K_1$, $K_2$, $K_3$) représentant l'absorption de chaleur effective du liquide et l'appareil ménager commutant dans un mode de service de détection d'entartrage dans le cas d'un écart significatif de la courbe de réglage ($K_1$, $K_2$, $K_3$) par rapport à une courbe de réglage standard ($K_{Norm}$).

**2.** Dispositif selon la revendication 1, **caractérisé en ce que** la courbe de réglage ($K_1$, $K_2$, $K_3$) déterminée par le système de contrôle (5) représente une courbe de réglage prescrite du dispositif de réglage (3, 3').

**3.** Dispositif selon l'une des revendications précédentes, **caractérisé en ce que** le système de contrôle (5) est conçu de telle sorte qu'il enregistre un écart significatif, lorsqu'on a une valeur de différence définie entre une valeur de paramètre caractéristique de la courbe de réglage ($K_1$, $K_2$, $K_3$) et une valeur de paramètre analogique de la courbe de réglage standard ($K_{Norm}$) au-dessus d'une valeur seuil.

**4.** Dispositif selon la revendication 3, **caractérisé en ce que** la valeur seuil diffère d'au moins 20 % par rapport à la valeur de paramètre de la courbe de réglage standard ($K_{Norm}$).

**5.** Dispositif selon l'une des revendications précédentes, **caractérisé en ce que** le système de contrôle (5) est conçu de telle sorte qu'il enregistre un écart significatif, lorsqu'on a un écart déterminé entre la forme de la courbe de réglage ($K_1$, $K_2$, $K_3$) et la forme de la courbe de réglage standard ($K_{Norm}$).

**6.** Dispositif selon l'une des revendications précédentes, **caractérisé par** une mémoire de courbe standard (41), qui enregistre et dépose la courbe de réglage standard ($K_{Norm}$) avant ou lors de la première mise en service de l'appareil ménager et/ou lors de la première mise en service après le passage par un cycle de détartrage.

**7.** Dispositif selon l'une des revendications précédentes, **caractérisé en ce que** le système de contrôle (5) est conçu de telle sorte qu'il prend en compte une période transitoire du dispositif de réglage (3, 3') lorsque l'appareil ménager commence à fonctionner et commute dans le mode de service de reconnaissance d'entartrage, lorsqu'il détermine, après la période transitoire, un écart significatif entre la courbe de réglage ($K_1$, $K_2$, $K_3$) et la courbe de réglage standard ($K_{Norm}$).

**8.** Procédé pour déterminer un état d'entartrage dans un appareil ménager électrique comprenant un réchauffeur de liquide (11), deux capteurs de température (19a, 19b) placés en amont et en aval du réchauffeur de liquide, un débitmètre (23), une unité de calcul de puissance (35) et un dispositif de réglage (3, 3') pour le réglage d'une puissance de chauffage (P) du réchauffeur de liquide (11 ), comprenant les étapes suivantes :

- détermination d'une courbe de réglage ($K_1$, $K_2$, $K_3$) représentant un comportement au réglage du dispositif de réglage (3, 3'), la courbe de réglage ($K_1$, $K_2$, $K_3$) représentant l'absorption de chaleur effective du liquide,
- comparaison de la courbe de réglage ($K_1$, $K_2$, $K_3$) avec une courbe de réglage standard ($K_{Norm}$),
- commutation de l'appareil ménager dans un mode de service de détection d'entartrage dans le cas d'un écart significatif entre la courbe de réglage ($K_1$, $K_2$, $K_3$) et la courbe de réglage standard ($K_{Norm}$).

**9.** Appareil ménager électrique, de préférence machine de préparation de café, **caractérisé par** un dispositif (1) selon l'une des revendications 1 à 8.

**10.** Appareil ménager selon la revendication 9, **caractérisé en ce qu'**il est conçu, de telle sorte que, dans le mode de service de détection d'entartrage, un affichage d'avertissement (15) de l'appareil ménager est activé et/ou une fonction de l'appareil ménager est limitée.

Figur 1

Figur 2

Figur 3

| 1 | 0 | 1 | 0 | 1 | 0 | 1 | 0 | 1 | 0 | 1 | 0 | 1 | 0 | 1 | 0 | 1 | 0 | 1 | 0 | SZK$_1$

| 1 | 0 | 1 | 1 | 1 | 0 | 1 | 1 | 1 | 0 | 1 | 1 | 1 | 0 | 1 | 1 | 1 | 0 | 1 | 1 | SZK$_2$

| 1 | 0 | 0 | 0 | 1 | 0 | 0 | 0 | 1 | 0 | 0 | 0 | 1 | 0 | 0 | 0 | 1 | 0 | 0 | 0 | SZK$_3$

.
.
.

# Figur 4

**IN DER BESCHREIBUNG AUFGEFÜHRTE DOKUMENTE**

**In der Beschreibung aufgeführte Patentdokumente**

- EP 1129653 A1
- EP 0008700 A1